# EUROPEAN PATENT SPECIFICATION

(11) **EP 0 838 646 B1**
(45) Date of publication and mention of the grant of the patent: **11.04.2001**
(21) Application number: 97308320.7
(22) Date of filing: 20.10.1997
(51) Int. Cl.: F25J 3/02, F25J 3/08

(54) **Ultra high purity oxygen distillation method and unit**
Ultrahochreines Sauerstoffdistillationsverfahren und Vorrichtung
Procédé et dispositif de distillation d'oxygène à ultra haute pureté

(30) Priority: 25.10.1996 US 738989
(43) Date of publication of application: 29.04.1998
(73) Proprietor: AIR PRODUCTS AND CHEMICALS, INC., Allentown, PA 18195-1501 (US)
(72) Inventor: Fidkowski, Zbigniew Tadeusz, Macungie, PA 18062 (US); Pruneski, Lawrence Walter, Schnecksville, PA 18078 (US); Agrawal, Rakesh, Emmaus, PA 18049 (US)
(74) Representative: Burford, Anthony Frederick

(56) References cited:
- EP-A- 0 343 421
- US-A- 2 926 501
- US-A- 5 195 324

## Description

The present invention pertains to the production of ultra high purity liquid oxygen from standard grade liquid oxygen.

Liquefied atmospheric gases, e.g., oxygen, nitrogen, argon, etc., are increasingly used in industry, providing cryogenic capabilities for a variety of industrial processes. There is an increasing demand for ultra high purity gases, especially in the electronics industry. Frequently, the time period needed to build a new ultra high purity gas plant for the electronics industry is undesirably long. Therefore, there is a need for a preassembled, portable "skid," defined as a preassembled, portable system, capable of being easily integrated with a relatively larger system and capable of producing ultra high purity gases with a reasonable efficiency.

There are several known processes for producing ultra high purity oxygen. Several processes are directed to producing ultra high purity oxygen (and sometimes also nitrogen) by cryogenic rectification of air, not by purification of standard grade oxygen. For example, US-A-4,560,397; US-A-4,615,716; US-A-4,977,746; US-A-5,049,173; and US-A-5,195,324 disclose these types of processes. Production of ultra high purity liquid oxygen by direct rectification of air consumes less energy than production of standard grade liquid oxygen and subsequent distillation of standard grade liquid oxygen to ultra high purity liquid oxygen.

In some circumstances, ultra high purity oxygen is produced by distillation of standard grade liquid oxygen. For example, US-A-3,363,427 discloses a process for purifying a standard grade oxygen. This process is carried out in a single distillation column at atmospheric pressure. US-A-4,780,118 and FR-A-2,640,032 disclose cryogenic processes for the production of ultra high purity oxygen from standard grade oxygen. According to the disclosures of these references, distillation columns are configured in the "direct sequence," in which argon is removed as a top product of a first column and the remaining mixture is separated in the second column into ultra high purity oxygen and a hydrocarbon-enriched waste stream. On the other hand, US-A-4,867,772 discloses the same process except in the "indirect sequence," in which all of the heavy impurities (e.g., hydrocarbons) are removed at the bottom of the first column, and the remaining mixture of argon and oxygen is separated in the second column.

In US-A-4,869,741, a process for producing ultra high purity oxygen is described. This process utilizes a system of distillation columns including a main column and a side stripper. Reboil and reflux ratio are controlled by nitrogen recycle. This system requires that a recycle compressor and the associated heat exchanger be used, which leads to a complex flow sheet with a substantial energy consumption.

The present invention pertains to a method for producing ultra high purity liquid oxygen from standard grade liquid oxygen in a high purity liquid oxygen unit, by utilizing the condensing duty provided by liquid nitrogen in a liquid nitrogen purification process. Standard grade liquid oxygen contains about 99.5 mole percent of oxygen, 0.5 mole percent of argon (which is more volatile than oxygen), and a trace amount (about 40 ppm) of hydrocarbons (which are less volatile than oxygen). Any known sequence of distillation columns which is suitable for separating this ternary mixture can be used with the present invention. A listing of some distillation column sequences for separating a ternary mixture can be found in Separation Processes, C. J. King, McGraw-Hill Book Co., New York 1980, page 711.

In the method of the present invention the potential condensing duty of liquid nitrogen is not lost, but instead is used to drive the ultra high purity liquid oxygen distillation process.

An embodiment of the present invention also provides for a portable skid, on which the ultra high purity oxygen system can be placed and which can be coupled with the system for producing ultra high purity gaseous nitrogen. The portable skid includes tanks, distillation columns, and heat exchangers, and does not include any pumps or compressors.

In the method of the present invention, a source of liquid nitrogen is pressurized and at least a portion of this liquid nitrogen is vaporized to form a high pressure gaseous nitrogen stream. The high pressure gaseous nitrogen stream is introduced to at least one bottom reboiler/condenser of a high purity liquid oxygen unit to provide heat to the unit and to form a nitrogen condensate stream. Standard grade liquid oxygen is also introduced to the high purity liquid oxygen unit for purification into ultra high purity liquid oxygen. The nitrogen condensate stream is introduced to at least one top reboiler/condenser of the high purity liquid oxygen unit to provide condensing duty (i.e., refrigeration) to the unit and to form a reduced pressure gaseous nitrogen stream, which is delivered to a nitrogen purification unit for purification into ultra high purity gaseous nitrogen. The following streams are withdrawn from the high purity liquid oxygen unit: (a) ultra high purity liquid oxygen; (b) an argon-enriched waste stream; and (c) a hydrocarbon-enriched waste stream.

According to a preferred embodiment of the present invention, only a portion of the liquid nitrogen (from the initial source of liquid nitrogen) is vaporized. The remaining portion of the liquid nitrogen is combined with the nitrogen condensate to form a combined stream, which is introduced to a top reboiler/condenser(s) of the high purity liquid oxygen unit.

The present invention further provides an apparatus for producing ultra high purity liquid oxygen from standard grade liquid oxygen by a method of the present invention, said apparatus comprising:
pump means for pressurizing a liquid nitrogen feed to provide a high pressure liquid nitrogen stream;
heat means for vaporizing at least a portion of the high pressure liquid nitrogen stream to form a high pressure gaseous nitrogen stream;
a high purity liquid oxygen unit for purifying the standard grade liquid oxygen into the ultra high purity liquid oxygen and having at least one bottom reboiler/condenser and at least one top reboiler/condenser;
standard grade liquid oxygen conduit means for introducing the standard grade liquid oxygen to the high purity liquid oxygen unit;
high pressure gaseous nitrogen conduit means for introducing the high pressure gaseous nitrogen stream to at least one bottom reboiler/condenser of the high purity liquid oxygen unit for providing heat to the high purity liquid oxygen unit and to form a nitrogen condensate stream;
nitrogen condensate conduit means for introducing the nitrogen condensate stream to at least one top reboiler/condenser of the high purity liquid oxygen unit for providing refrigeration to the high purity liquid oxygen unit and to form a reduced pressure gaseous nitrogen stream;
reduced pressure gaseous nitrogen conduit means for introducing the reduced pressure gaseous nitrogen stream to a nitrogen purification unit;
ultra high purity liquid oxygen conduit means for withdrawing an ultra high purity liquid oxygen product stream from the high purity liquid oxygen unit;
argon-enriched waste conduit means for withdrawing an argon-enriched waste stream from the high purity liquid oxygen unit; and
hydrocarbon-enriched waste conduit means for withdrawing a hydrocarbon-enriched waste stream from the high purity liquid oxygen unit.

As indicated above, it is preferred that only a portion of the high pressure liquid nitrogen stream is vaporized to form the high pressure gaseous nitrogen stream and at least part of the remaining portion of the high pressure liquid nitrogen stream is combined with the nitrogen condensate stream to form a combined stream which is introduced to the at least one top reboiler/condenser of the high purity liquid oxygen unit.

The standard grade liquid oxygen can be introduced to a first distillation column for separation into the hydrocarbon-enriched waste stream and a top vapor stream containing argon and oxygen; and the top vapor stream introduced to a second distillation column for separation into an argon-enriched vapor overhead and the ultra high purity liquid oxygen as a bottom product.

There may be a ("first") top reboiler/condenser associated with the second distillation column and a portion of the argon-enriched vapor overhead condensed in the first top reboiler/condenser and returned as reflux to the second distillation column. The remaining portion of the argon-enriched vapor overhead can be withdrawn as the argon-enriched waste stream and a liquid side stream from the second distillation column can be withdrawn and introduced to the first distillation column as reflux.

Alternatively, a ("first") top reboiler/condenser can be associated with the second distillation column and another ("second") reboiler/condenser associated with the first distillation column. The top vapor stream containing argon and oxygen is condensed in the second top reboiler/condenser and a portion returned as reflux to the first distillation column and a portion of the argon-enriched vapor overhead is condensed in the second top reboiler/condenser and returned as reflux to the second distillation column. The remaining portion of the argon-enriched vapor overhead is withdrawn as the argon-enriched waste stream.

In other embodiments, the standard grade liquid oxygen can be introduced to a first distillation column for separation into the argon-enriched waste stream a bottom stream containing hydrocarbons and oxygen and the bottom stream introduced to a second distillation column for separation into the ultra high purity liquid oxygen stream and the hydrocarbon-enriched waste stream.

In yet other embodiments, the standard grade liquid oxygen is introduced to a first distillation column for separation into the hydrocarbon-enriched waste stream and the argon-enriched waste stream. A vapor stream is withdrawn from the first distillation column and introduced to a second distillation column for rectification into ultra high purity gaseous oxygen and a liquid stream, which is introduced to the first distillation column. A ("first") top reboiler/condenser is associated with the second distillation column and condenses the ultra high purity gaseous oxygen to form the ultra high purity liquid oxygen.

Alternatively, the standard grade liquid oxygen can be introduced to a first distillation column for separation into a top stream containing argon and oxygen and a bottom stream containing hydrocarbons and oxygen. The top stream and the bottom stream are introduced to a second distillation column for separation into the argon-enriched waste stream, the ultra high purity liquid oxygen, and the hydrocarbon-enriched waste stream. A ("first") top reboiler/condenser can be associated with this second distillation column and another ("second") top reboiler/condenser associated with this first distillation column. The top stream containing argon and oxygen is condensed in the second top reboiler/condenser and a portion returned as reflux to the first distillation column. A portion of argon-enriched vapor overhead in the second distillation column is condensed in the first top reboiler/condenser and returned as reflux to the second distillation column and the remaining portion of the argon-enriched vapor overhead is withdrawn as the argon-enriched waste stream.

In an alternative arrangement, a ("first") reboiler/condenser is associated with the second distillation column and a portion of argon-enriched vapor overhead in the second distillation column is condensed in this top reboiler/condenser and returned as reflux to the second distillation column. The remaining portion of the argon-enriched vapor overhead is withdrawn as the argon-enriched waste stream. A liquid side stream is withdrawn from the second distillation column and introduced to the first distillation column and a vapor side stream is withdrawn from the second distillation column and introduced to the first distillation column.

In all embodiments, the liquid nitrogen feed preferably is pressurized to a pressure sufficient to drive the high purity liquid oxygen unit. Advantageously, the pressure is sufficient to provide the reduced pressure gaseous nitrogen stream at 350 to 1050 kPaa (50 to 150 psia).

The following is a description by way of example only and with reference to the accompanying drawings of embodiments of the present invention. In the drawings:
Fig. 1 is a schematic diagram of a prior art process, showing the configuration of the high purity liquid oxygen unit;
Fig. 2 is a general schematic diagram of a known ambient liquid nitrogen vaporizer/purification process;
Fig. 3 is a general schematic diagram of the process of the present invention;
Fig. 4 is a schematic diagram of a first embodiment of the present invention, showing the configuration of the high purity liquid oxygen unit;
Fig. 5 is a schematic diagram of a second embodiment of the present invention, showing the configuration of the high purity liquid oxygen unit;
Fig. 6 is a schematic diagram of a third embodiment of the present invention, showing the configuration of the high purity liquid oxygen unit;
Fig. 7 is a schematic diagram of a fourth embodiment of the present invention, showing the configuration of the high purity liquid oxygen unit;
Fig. 8 is a schematic diagram of a fifth embodiment of the present invention, showing the configuration of the high purity liquid oxygen unit; and
Fig. 9 is a schematic diagram of a sixth embodiment of the present invention, showing the configuration of the high purity liquid oxygen unit.

In the drawing, like reference numerals refer to like elements throughout.

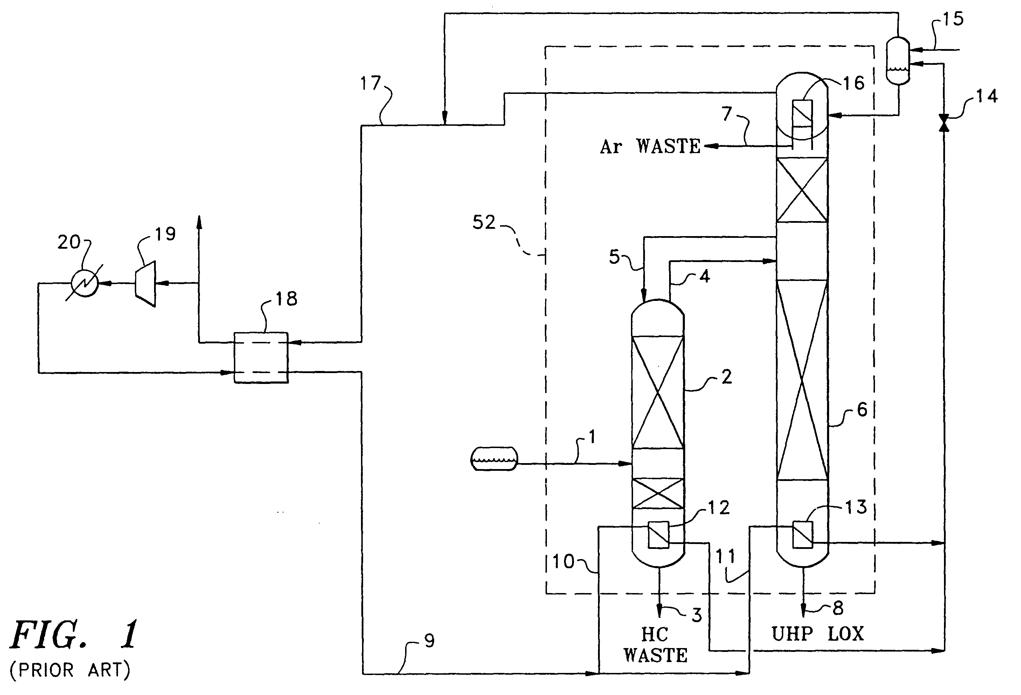

Fig. 1 is a schematic diagram of a process representative of US-A-4,869,741 in which ultra high purity liquid oxygen is obtained from standard grade liquid oxygen. Standard grade liquid oxygen is introduced as feed in line 1 to a first distillation column 2 (i.e., a stripper), where the feed liquid oxygen is separated into a hydrocarbon-enriched waste stream 3 and a top vapor stream containing argon and oxygen in line 4. Stream in line 4 is substantially free of hydrocarbons. Top vapor stream in line 4 is then introduced to a second distillation column 6, where it is separated into an argon-enriched waste stream in line 7 and ultra high purity liquid oxygen in line 8, which is withdrawn from second distillation column 6 as a bottom product.

Reflux is provided into first distillation column 2 by withdrawing a liquid side product in line 5 from second distillation column 6 and introducing the liquid side product into the top of first distillation column 2..Reboil duty is provided to both columns 2 & 6 by a recycle nitrogen stream 9, which also provides condensation duty to the second distillation column 6. In particular, pressurized recycle gaseous nitrogen in line 9 is divided into two streams in 10 and 11, which are condensed in bottom reboiler/condenser 12 of column 2 and bottom reboiler/condenser 13 of column 6, respectively. The nitrogen condensate streams are consolidated to form a single stream which is decreased in pressure across an isenthalpic Joule-Thompson (JT) valve 14 and used, together with any supplemental liquid nitrogen introduced in line 15, as a cooling medium in a top reboiler/condenser 16 located at the top of distillation column 6. Vaporized nitrogen from the top reboiler/condenser 16 and vapor from phase separation of the nitrogen prior feed thereto provide a gaseous recycle nitrogen stream in line 17.

In the nitrogen recycle system, the gaseous recycle nitrogen 17 is warmed in heat exchanger 18 to near ambient temperature. The warmed gaseous nitrogen is then compressed to a higher pressure in recycle compressor 19, cooled with cooling water in heat exchanger 20 and subsequently in the recycle heat exchanger 18 to provide the recycle nitrogen stream in line 9. The pressure in the recycle compressor discharge system is chosen such that the pressure of stream in line 9 is the correct pressure for the nitrogen to condense in reboiler/condensers 12 and 13 while maintaining the required temperature differences across the condensing and boiling fluid passages.

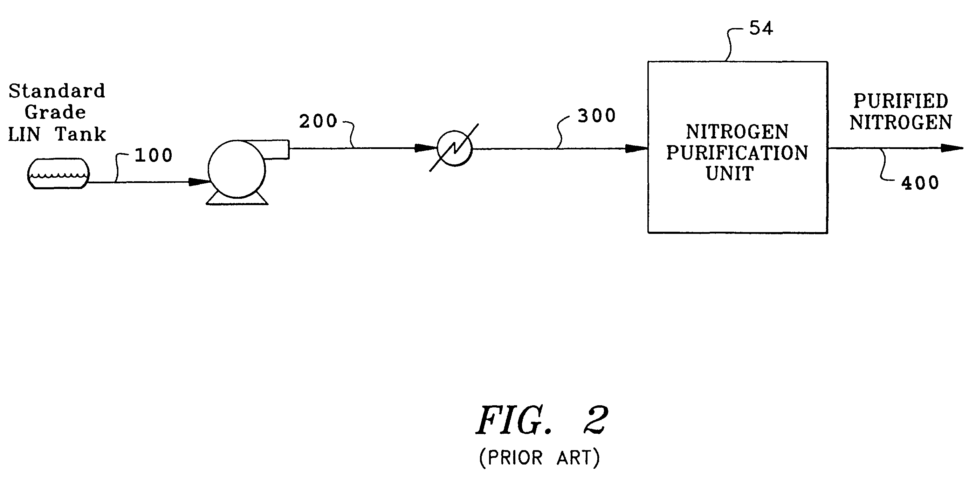

When ultra high purity nitrogen is produced from standard grade liquid nitrogen using catalytic methods, the energy of evaporation is normally supplied either by ambient heat, water, steam, or electricity. In Fig. 2, a conventional ambient liquid nitrogen vaporizer is shown. In this process, standard grade liquid nitrogen in line 100 is pressurized to an appropriate pressure to form pressurized liquid nitrogen in line 200, vaporized to form gaseous nitrogen in line 300, and introduced to a catalytic purifier (i.e., nitrogen purification unit 54) to remove oxygen and carbon monoxide, resulting in ultra high purity nitrogen in line 400. The potential condensing duty of liquid nitrogen is not utilized.

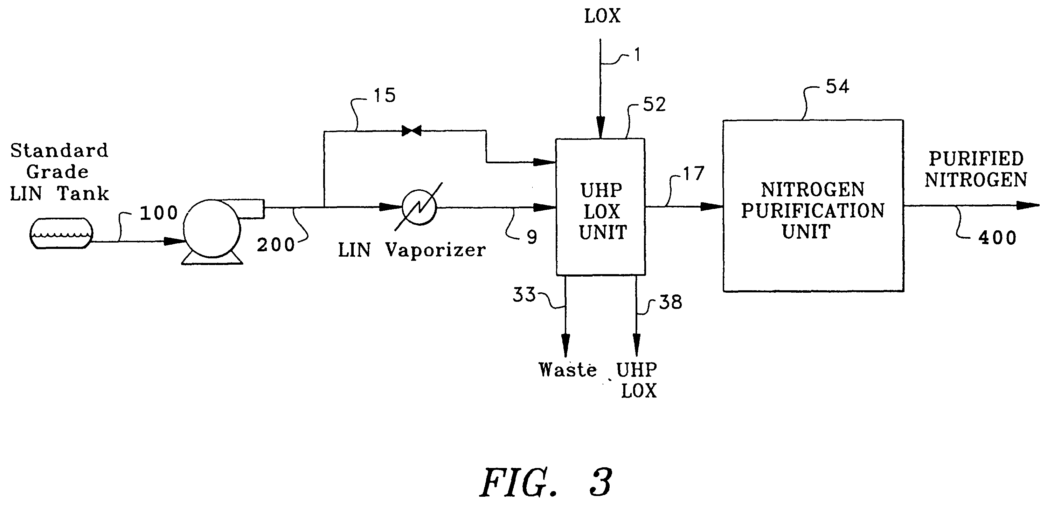

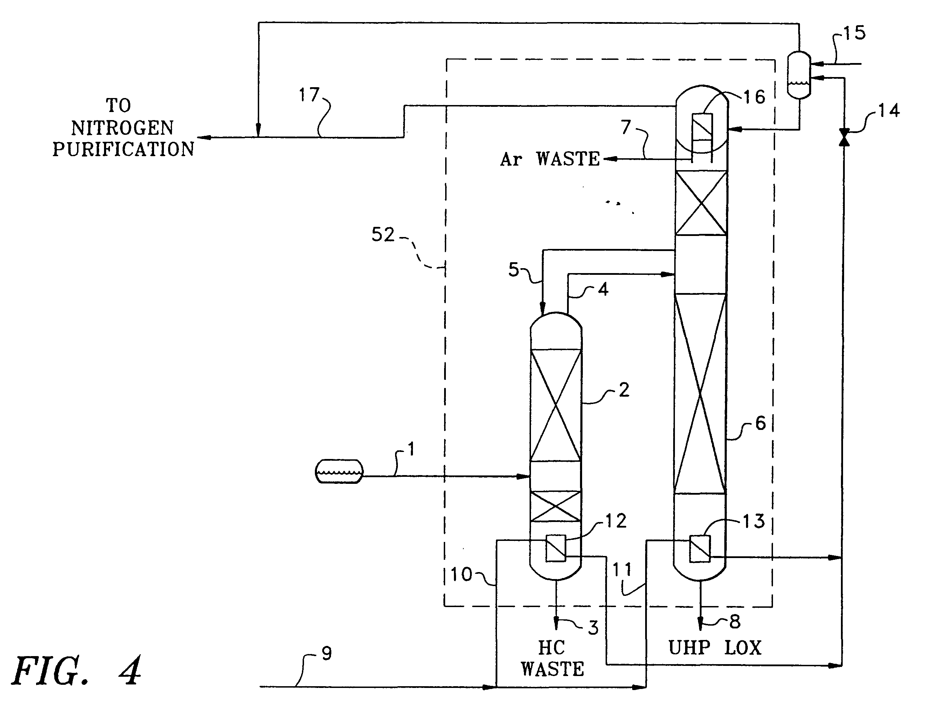

Fig. 3 shows a general schematic of the present invention, with the details of various embodiments of the high purity liquid oxygen unit 52 displayed in Figs. 4-9. As shown in Fig. 3, a source of liquid nitrogen is pressurized to a pressure which is higher than the pressure at which purified nitrogen is needed for delivery to a nitrogen purification unit. Specifically, liquid nitrogen stream in line 100 is pressurized by a pump resulting in a high pressurize liquid nitrogen stream in line 200. At least a portion of stream in line 200 is vaporized to form a high pressure gaseous nitrogen stream in line 9 which is delivered to high purity liquid oxygen unit 52. Optionally, not all of the liquid nitrogen stream in line 200 is vaporized, and the remaining portion, liquid nitrogen stream in line 15, is introduced to high purity liquid oxygen unit 52, at a different location, to provide some refrigeration. The ratio of liquid nitrogen to gaseous nitrogen delivered to high purity liquid oxygen unit 52 will depend on the level of heat leak to high purity liquid oxygen unit 52. With a greater heat leak, the more condensing duty would be required, so a relatively greater amount of liquid nitrogen would be needed. The streams withdrawn from high purity liquid oxygen unit 52 include at least one waste stream in line 33 (including hydrocarbons and argon) and an ultra high purity liquid oxygen product stream in line 38 (as shown in Fig. 3).

Generally, in the high purity liquid oxygen unit 52 (as shown in detail in Figs. 4-9), high pressure gaseous nitrogen stream in line 9 is condensed in at least one bottom reboiler/condenser to provide the necessary heat to the distillation columns of the unit. By giving off heat in the bottom reboiler/condenser(s), the high pressure gaseous nitrogen condenses. The condensed nitrogen is then reduced in pressure and delivered to at least one top reboiler/condenser to provide the necessary condensing duty to the distillation columns of high purity liquid oxygen unit 52. Any needed reflux to the distillation columns is generated by the liquid nitrogen delivered to the top reboiler/condenser(s). By taking on heat in the top reboiler/condenser(s), the liquid nitrogen vaporizes to form a reduced pressure gaseous nitrogen stream in line 17. The pressure of the distillation column is adjusted such that the vaporized nitrogen stream in line 17 is at a pressure which is slightly higher than the pressure of the purified nitrogen in line 400 exiting nitrogen purification unit 54. In particular, the pressure of vaporized nitrogen in line 17 leaving high purity liquid oxygen unit 52 would be the same as stream in line 300 of Fig. 2. Because the entire stream of vaporized nitrogen is sent directly to nitrogen purification unit 54 (as shown in Fig. 3), the process of the present invention does not use any recycled nitrogen and therefore does not require the associated compressor or heat exchanger.

Turning to the specifics of high purity liquid oxygen unit 52 as shown in Fig. 4, this embodiment includes a distillation column with a side stripper. Specifically, standard grade liquid oxygen is introduced as feed in line 1 to a first distillation column 2 (i.e., a stripper), where the feed liquid oxygen is separated into a hydrocarbon-enriched waste stream 3 and a top vapor stream containing argon and oxygen in line 4. Stream in line 4 is substantially free of hydrocarbons. Top vapor stream in line 4 is then introduced to a second distillation column 6, where it is separated into an argon-enriched waste stream in line 7 and ultra high purity liquid oxygen in line 8, which is withdrawn from second distillation column 6 as a bottom product. In the embodiment shown in Fig. 4, reflux is provided into first distillation column 2 by withdrawing a liquid side product in line 5 from second distillation column 6 and introducing the liquid side product into the top of first distillation column 2.

Pressurized nitrogen vapor in line 9 is divided into two streams in 10 and 11, which are condensed in bottom reboiler/condensers 12 and 13, respectively. These streams provide the necessary heat to distillation columns 2 and 6. The nitrogen condensate streams are consolidated to form a single stream which is decreased in pressure across an isenthalpic Joule-Thompson (JT) valve 14 and used, together with any supplemental liquid nitrogen introduced in line 15, as a cooling medium in a top reboiler/condenser 16 located at the top of distillation column 6. Reduced pressure gaseous nitrogen stream in line 17 is then purified in nitrogen purification unit 54, as shown in Fig. 3. If needed, refrigeration from nitrogen stream in line 17 can be recovered in appropriate heat exchangers. The refrigeration from liquid nitrogen in the top reboiler/condenser 16 serves to condense argon-enriched overhead vapor from column 6 to provide the reflux necessary for separation. Waste stream in line 7 is preferably withdrawn as a vapor to save refrigeration. Although the top and bottom reboiler/condensers are shown in all of the figures as being contained within the respective columns, the reboiler/condensers only need be associated with the columns, either by being contained therein or situated near the columns. By being associated with the columns, the reboilers/condensers are in fluid communication with the columns.

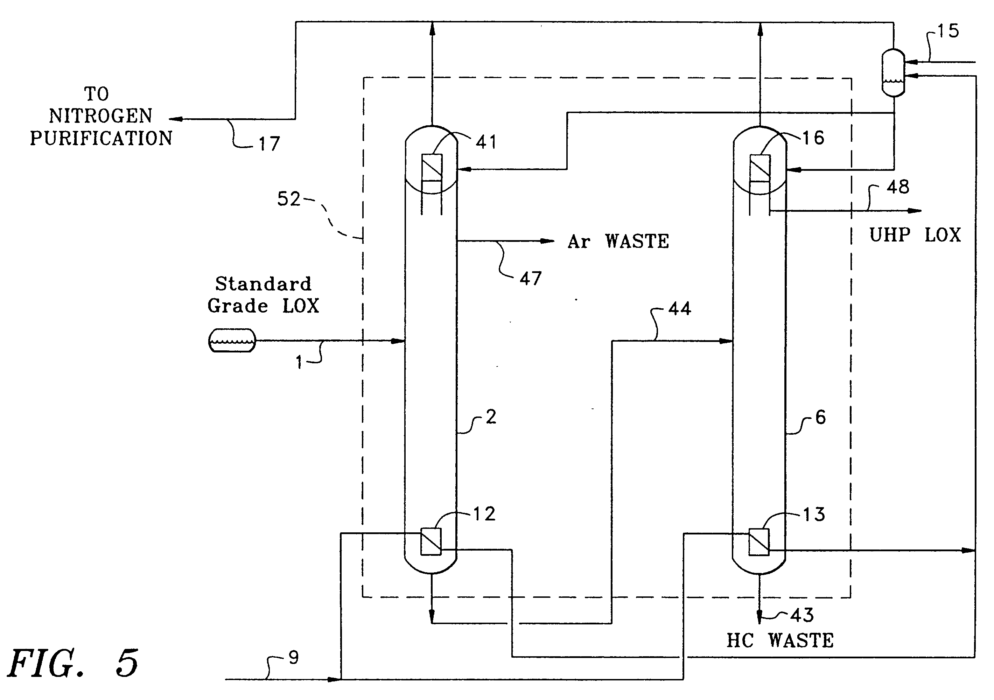

Other examples of different distillation configurations of the high purity liquid oxygen unit 52 for separating the ternary mixture of oxygen, argon, and hydrocarbons are shown in Figs. 5-9. In Fig. 5, standard grade liquid oxygen in line 1 is separated in the "direct sequence" of distillation columns. According to the direct sequence of distillation columns, the most volatile component, argon, is removed as an argon-enriched waste stream in line 47 as a top product in the first distillation column 2. The bottom product of first column 2 in line 44 (i.e., a bottom stream containing hydrocarbons and oxygen) is then introduced to a second distillation column 6. In distillation column 6, the bottom stream containing hydrocarbons and oxygen is separated into ultra high purity gaseous oxygen and a hydrocarbon-enriched waste stream in line 43. As in the embodiment shown in Fig. 4, two bottom reboiler/condensers 12 and 13 are used. In this case, however, two top reboiler/condensers 16 and 41 are used to provide the necessary reflux to each column. Also, top reboiler/condenser 16 associated with second distillation column 6 serves to condense the high purity gaseous oxygen to form ultra high purity liquid oxygen in line 48.

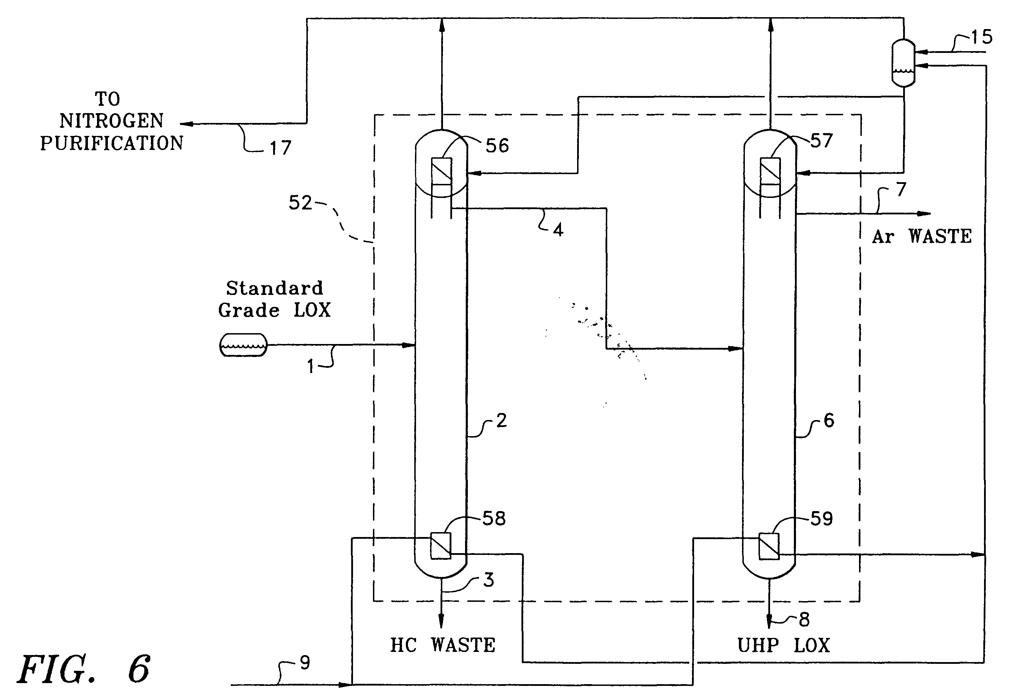

In Fig. 6, standard grade liquid oxygen in line 1 is separated in the "indirect sequence" of distillation columns, in which hydrocarbons are first removed as a bottom product in line 3 of first distillation column 2. The top product of first distillation column 2 is a top vapor stream containing argon and oxygen. In this system, each distillation column 2 and 6 has its own bottom reboiler/condenser 58 and 59 and its own top reboiler/condenser 56 and 57 for providing necessary reflux to each column. Specifically, the top vapor stream containing argon and oxygen in first distillation column 2 is condensed in top reboiler/condenser 56 with a portion of the condensed top stream returning as reflux to first distillation column 2. The remaining portion is delivered to second distillation column 6 via line 4. There, the distillate is separated into ultra high purity liquid oxygen and an argon-enriched top vapor. A portion of the argon-enriched top vapor is withdrawn as argon-enriched waste stream in line 7, and another portion is condensed in the top reboiler/condenser 57 of distillation column 6 to be returned as reflux to second distillation column 6. Ultra high purity liquid oxygen is withdrawn in line 8 as a bottom product from second distillation column 6.

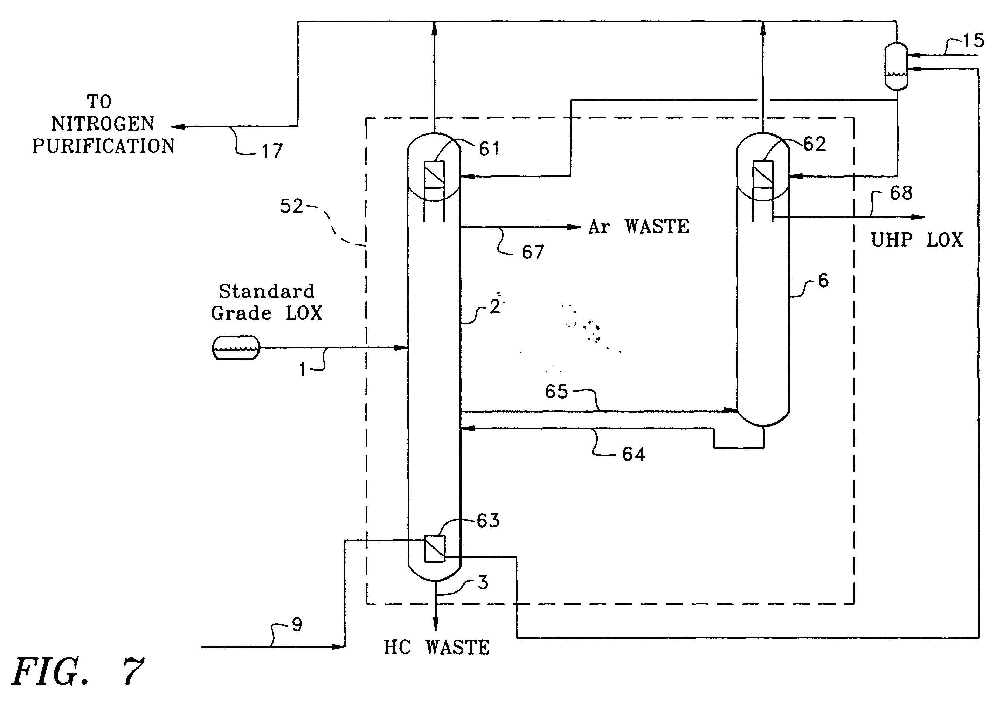

In the embodiment shown in Fig. 7, a system with a side rectifier is used to separate standard grade liquid oxygen. Specifically, standard grade liquid oxygen in line 1 is introduced to a first distillation column 2 for separation into a hydrocarbon-enriched waste stream in line 3, a vapor stream, and a top argon-enriched waste stream. In this system, only first distillation column 2 requires a bottom reboiler/condenser 63. Vapor stream in line 65 is withdrawn from first distillation column 2 and introduced to second distillation column 6 for rectification into ultra high purity gaseous oxygen and side liquid stream 64. Side liquid stream 64 is returned to first distillation column 2 for a continued separation. Both distillation columns include a top reboiler/condenser 61 and 62, with the top reboiler/condenser 62 in distillation column 6 serving to condense ultra high purity gaseous oxygen into ultra high purity liquid oxygen, a portion of which is withdrawn in line 68 and a portion of which is returned as reflux to second distillation column 6. Top reboiler/condenser 61 serves to condense the argon-enriched waste stream to provide reflux to first distillation column 2. An argon-enriched waste stream in line 67 can be withdrawn either as a vapor or a liquid, but preferably as a vapor to conserve refrigeration.

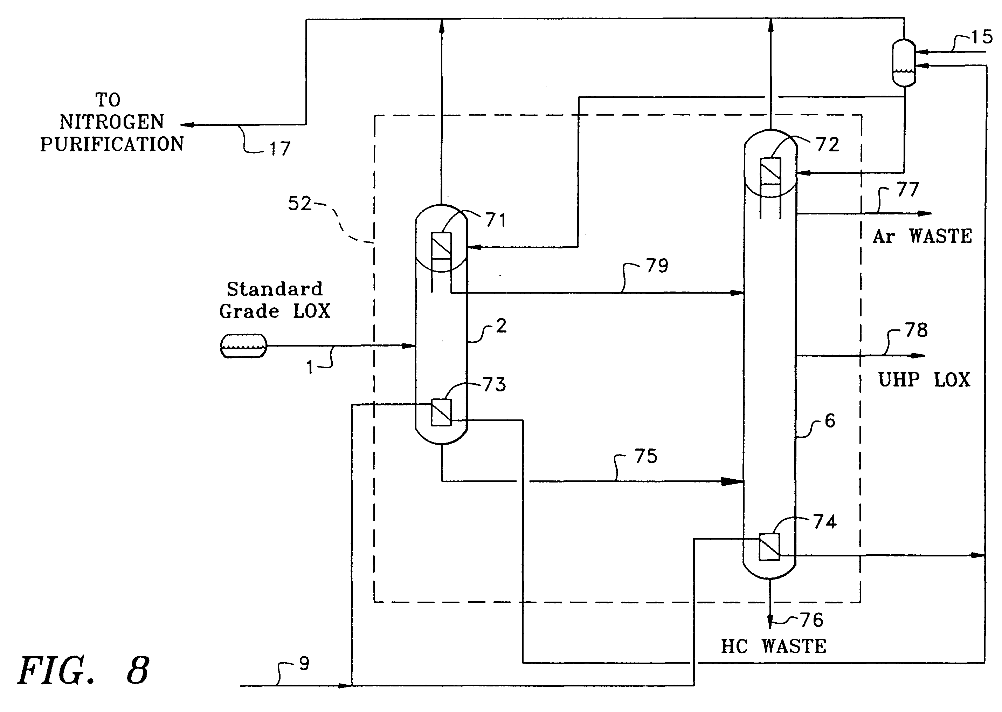

In Fig. 8, the ternary mixture of argon, oxygen, and hydrocarbons in standard grade liquid oxygen in line 1 is initially prefractionated in first distillation column 2. This step causes the ternary mixture to separate into two binary mixtures: A top stream containing argon and oxygen and a bottom stream containing hydrocarbons and oxygen. The top stream containing argon and oxygen is condensed in a top reboiler/condenser 71 and a portion is returned to first distillation column 2 as reflux. The remaining portion is fed via line 79, along with bottom stream containing hydrocarbons and oxygen withdrawn in line 75, into second distillation column 6 in two locations. Specifically, stream in line 79 is introduced at a location above stream in line 75. Second column 6 produces an argon-enriched overhead vapor, ultra high purity liquid oxygen as a side product withdrawn in line 78, and a hydrocarbon-enriched waste stream withdrawn as a bottom product in line 76. A portion of the argon-enriched overhead vapor is withdrawn as a waste stream in line 77, and another portion is condensed in a second top reboiler/condenser 72 and returned as reflux to second distillation column 6. In the embodiment shown in Fig. 8, each distillation column also includes its own bottom reboiler/condenser 73 and 74.

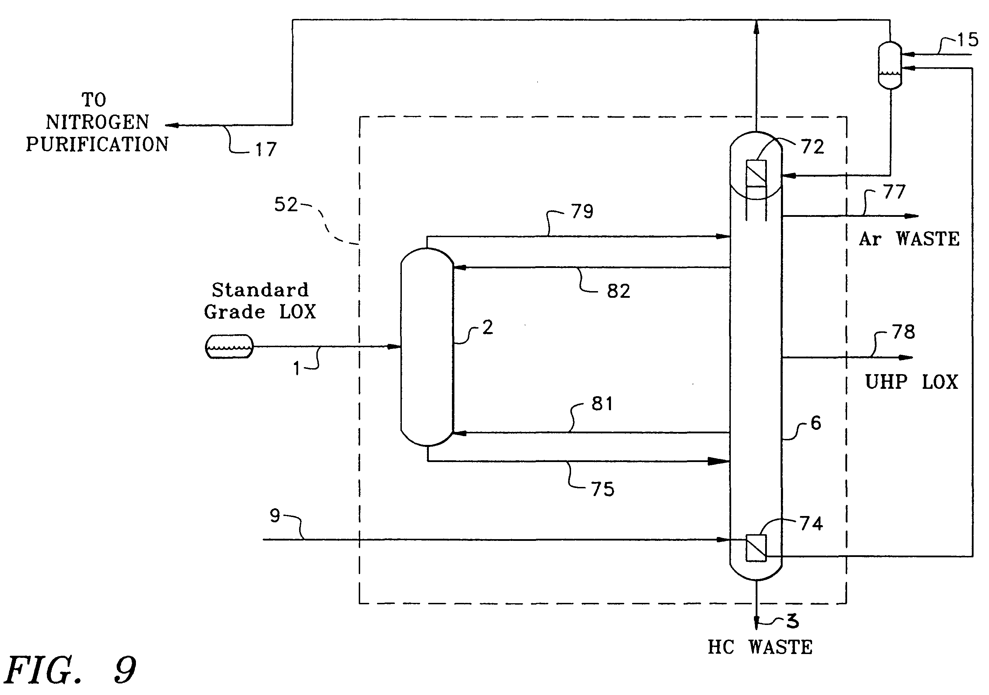

The system of Fig. 9 is very similar to the system shown in Fig. 8 except that first distillation column 2 does not have a bottom reboiler/condenser or a top reboiler/condenser. Instead, the reboil and reflux ratios of first distillation column 2 are controlled by a vapor side stream in line 81 which is withdrawn from second distillation column 6 and introduced to first distillation column 2 near its bottom, and a liquid side stream in line 82 which is withdrawn from second distillation column 6 and introduced to first distillation column 2 near its top.

In all of the embodiments shown in Fig. 4-9, the components of the high purity liquid oxygen unit 52 are integrated with a nitrogen purification unit 54 in that high pressure nitrogen vapor is introduced to unit 52 in line 9 and withdrawn from unit 52 in line 17 to nitrogen purification unit 54. Supplemental liquid nitrogen can be provided in line 15 to supply additional refrigeration to high purity liquid oxygen unit 52.

Generally, the desired pressure of purified nitrogen is in the range of 50 psia (350 kPa) to 150 psia (1050 kPa). This pressure sets the pressure of stream in line 17 in Fig. 3. Therefore, the pressure of the distillation columns is set by the pressure of the vaporizing nitrogen to maintain proper temperature differences between the condensing and boiling liquids. Consequently, the pressure of entering liquid and nitrogen vapor to the high purity liquid oxygen unit 52 is determined from the above conditions. Specifically, the liquid nitrogen should be pressurized to a pressure sufficient to drive (i.e., provide sufficient boilup and condensing duties to) the high purity liquid oxygen unit.

### EXAMPLE

In order to demonstrate the efficacy of the present invention and to compare the present invention to a conventional process, the following example was developed. In Table 1 below, the stream parameters are listed for the embodiment shown in Fig. 4. The basis of the simulations is a feed of 1.000 Ib-mole/hour (453.5 g-mole/hour) of standard grade liquid oxygen in line 1. In the simulations, the number of theoretical trays in distillation column 2 was 22, and the number of theoretical trays in distillation column 6 was 96. The pressure of gaseous nitrogen to be sent to a nitrogen purifier unit is taken to be about 54 psia (372.5 kPa).

**Table 1**

| Stream Number | Flow Ib-mole/h (g-mole/h) | Temperature deg F (°C) | Pressure psia (kPa) | Ar mole fraction | O₂ mole fraction | HC mole fraction | N₂ mole fraction |
|---|---|---|---|---|---|---|---|
| 1 | 1.000 (453.5) | -289 (-178.5) | 23.0 (158.5) | .005 | .995 | 4E-5 | - |
| 3 | 0.125 (56.5) | -289 (-178.5) | 23.2 (160) | .00088 | .9988 | .00032 | - |
| 4 | 1.750 (794) | -290 (-179) | 21.7 (149.5) | .0037 | .9963 | - | - |
| 5 | 0.875 (397) | -290 (-179) | 21.7 (149.5) | .0018 | .9982 | - | - |
| 7 | 0.010 (4.5) | -295 (-181.5) | 20.0 (138) | .4938 | .5062 | - | - |
| 8 | 0.865 (392.5) | -286 (-176.5) | 26.6 (183.5) | - | 1.0000 | - | - |
| 9 | 7.527 (3414) | -284 (-175.5) | 95.5 (658.5) | .00011 | 1.0E-6 | - | .99989 |
| 10 | 2.490 (1129.5) | -284 (-175.5) | 95.0 (655) | .00011 | 1.0E-6 | - | .99989 |
| 11 | 5.037 (2285) | -284 (-175.5) | 95.0 (655) | .00011 | 1.0E-6 | - | .99989 |
| 15 | 0.115 (52) | -296 (-182) | 55.0 (379) | .00011 | 1.0E-6 | - | .99989 |
| 17 | 7.642 (3466.5) | -297 (-183) | 54.0 (372.5) | .00011 | 1.0E-6 | - | .99989 |

If the process of Fig. 1 were used to provide gaseous nitrogen for a nitrogen purification unit, the recycled nitrogen would have to be compressed from about 50 psia (350 kPa) to 100 psia (700 kPa) (allowing for pressure drops in the recycle heat exchanger). According to the present invention, however, this energy consumption is eliminated by vaporizing liquid nitrogen in a vaporizer to a higher pressure of about 95 psia (650 kPa) rather than 54 psia (372.5 kPa), which would be required if the nitrogen were to be applied directly to a nitrogen purifier.

Although illustrated and described herein with reference to certain specific embodiments, the present invention is nevertheless not intended to be limited to the details shown. Rather, various modifications may be made in the details within the scope of the following claims.

## Claims

1. A method of producing ultra high purity liquid oxygen from standard grade liquid oxygen comprising the steps of:
pressurizing a liquid nitrogen feed (100) to provide a high pressure liquid nitrogen stream (200);
vaporizing at least a portion of said high pressure liquid nitrogen stream (200) to form a high pressure gaseous nitrogen stream (9);
introducing said standard grade liquid oxygen (1) to a high purity liquid oxygen unit (52) for purifying said standard grade liquid oxygen into said ultra high purity liquid oxygen;
introducing said high pressure gaseous nitrogen stream (9) to at least one bottom reboiler/condenser (12,13,58,59,63,73,74) of said high purity liquid oxygen unit (52) for providing heat to said high purity liquid oxygen unit (52) and to form a nitrogen condensate stream (14);
introducing said nitrogen condensate stream (14) to at least one top reboiler/condenser (16,41,56,57,61,62,71,72) of said high purity liquid oxygen unit (52) for providing refrigeration to said high purity liquid oxygen unit (52) and to form a reduced pressure gaseous nitrogen stream (17);
introducing said reduced pressure gaseous nitrogen stream (17) to a nitrogen purification unit (54); and
withdrawing from said high purity liquid oxygen unit (52): (a) an ultra high purity liquid oxygen product stream (8,38,48,68,78); (b) an argon-enriched waste stream (7,47,67,77); and (c) a hydrocarbon-enriched waste stream (3,43,76).

2. A method of Claim 1, wherein only a portion of said high pressure liquid nitrogen stream is vaporized to form said high pressure gaseous nitrogen stream (9) and at least part of the remaining portion (15) of said high pressure liquid nitrogen stream is combined with said nitrogen condensate stream (14) to form a combined stream which is introduced to said at least one top reboiler/condenser (16,41,56,57,61,62,71,72) of said high purity liquid oxygen unit (52).

3. A method of Claim 1 or Claim 2, wherein said standard grade liquid oxygen (1 ) is introduced to a first distillation column (2) for separation into said hydrocarbon-enriched waste stream (3) and a top vapor stream (4) containing argon and oxygen; and said top vapor stream (4) is introduced to a second distillation column (6) for separation into an argon-enriched vapor overhead and said ultra high purity liquid oxygen as a bottom product (8).

4. A method of Claim 3, wherein:
a said at least one top reboiler/condenser (16) is associated with said second distillation column (6)
a portion of said argon-enriched vapor overhead is condensed in said first top reboiler/condenser (16) and returned as reflux to said second distillation column (6);
the remaining portion of said argon-enriched vapor overhead is withdrawn as said argon-enriched waste stream (7); and
a liquid side stream (5) from said second distillation column (6) is withdrawn and introduced to said first distillation column (2) as reflux.

5. A method of Claim 3, wherein:
a said at least one top reboiler/condenser (57) is associated with said second distillation column (6);
another said at least one top reboiler/condenser (56) is associated with said first distillation column (2);
said top vapor stream containing argon and oxygen is condensed in said second top reboiler/condenser (56) and a portion returned as reflux to said first distillation column (2);
a portion of said argon-enriched vapor overhead is condensed in said second top reboiler/condenser (57) and returned as reflux to said second distillation column (6); and
the remaining portion of said argon-enriched vapor overhead is withdrawn as said argon-enriched waste stream (7).

6. A method of Claim 1 or Claim 2, wherein said standard grade liquid oxygen (1) is introduced to a first distillation column (2) for separation into said argon-enriched waste stream (67) and a bottom stream (44) containing hydrocarbons and oxygen; and
said bottom stream (44) is introduced to a second distillation column (6) for separation into said ultra high purity liquid oxygen stream (48) and said hydrocarbon-enriched waste stream (43).

7. A method of Claim 1 or Claim 2, wherein said standard grade liquid oxygen (1) is introduced to a first distillation column (2) for separation into said hydrocarbon-enriched waste stream (3) and said argon-enriched waste stream (67);
a vapor stream (65) is withdrawn from said first distillation column (2) and introduced to a second distillation column (6) for rectification into ultra high purity gaseous oxygen and a liquid stream (64);
said liquid stream (64) is introduced to said first distillation column (2);
a said at least one top reboiler/condenser (62) is associated with said second distillation column (6) and condenses said ultra high purity gaseous oxygen to form said ultra high purity liquid oxygen (68).

8. A method of Claim 1 or Claim 2, wherein said standard grade liquid oxygen (1) is introduced to a first distillation column (2) for separation into a top stream (79) containing argon and oxygen and a bottom stream (75) containing hydrocarbons and oxygen; and
said top stream (79) and said bottom stream (75) are introduced to a second distillation column (6) for separation into said argon-enriched waste stream (77), said ultra high purity liquid oxygen (78), and said hydrocarbon-enriched waste stream (76).

9. A method of Claim 8, wherein:
a said at least one top reboiler/condenser (72) is associated with said second distillation column (6);
another said at least one top reboiler/condenser (71) is associated with said first distillation column (2);
said top stream containing argon and oxygen is condensed in said another top reboiler/condenser (71) and a portion returned as reflux to said first distillation column (2);
a portion of argon-enriched vapor overhead in said second distillation column (6) is condensed in said top reboiler/condenser (72) and returned as reflux to said second distillation column (6); and
the remaining portion of said argon-enriched vapor overhead is withdrawn as said argon-enriched waste stream (77).

10. A method of Claim 8, wherein:
a said at least one top reboiler/condenser (72) is associated with said second distillation column (6);
a portion of argon-enriched vapor overhead in said second distillation column (6) is condensed in said at least one top reboiler/condenser (72) and retumed as reflux to said second distillation column (6);
the remaining portion of said argon-enriched vapor overhead is withdrawn as said argon-enriched waste stream (77);
a liquid side stream (82) is withdrawn from said second distillation column (6) and introduced to said first distillation column (2); and
a vapor side stream (81) is withdrawn from said second distillation column (6) and introduced to said first distillation column (2).

11. A method of any one of the preceding claims, wherein said liquid nitrogen feed (100) is pressurized to a pressure sufficient to drive said high purity liquid oxygen unit (54).

12. A method of Claim 11, wherein said pressure is sufficient to provide said reduced pressure gaseous nitrogen stream (400) at 350 to 1050 kPaa (50 to 150 psia).

13. An apparatus for producing ultra high purity liquid oxygen from standard grade liquid oxygen by the method as defined in Claim 1, said apparatus comprising:
pump means for pressurizing a liquid nitrogen feed (100) to provide a high pressure liquid nitrogen stream (200);
heat means for vaporizing at least a portion of said high pressure liquid nitrogen stream (200) to form a high pressure gaseous nitrogen stream (9);
a high purity liquid oxygen unit (52) for purifying said standard grade liquid oxygen into said ultra high purity liquid oxygen and having at least one bottom reboiler/condenser (12,13,58,59,63,73,74) and at least one top reboiler/condenser (16,41,56,57,61,62,71,72);
standard grade liquid oxygen conduit means for introducing said standard grade liquid oxygen (1) to said high purity liquid oxygen unit (52);
high pressure gaseous nitrogen conduit means for introducing said high pressure gaseous nitrogen stream (9) to at least one bottom reboiler/condenser (12,13,58,59,63,73,74) of said high purity liquid oxygen unit (52) for providing heat to said high purity liquid oxygen unit (52) and to form a nitrogen condensate stream (14);
nitrogen condensate conduit means for introducing said nitrogen condensate stream (14) to at least one top reboiler/condenser (16,41,56,57,61,62,71,72) of said high purity liquid oxygen unit (52) for providing refrigeration to said high purity liquid oxygen unit (52) and to form a reduced pressure gaseous nitrogen stream (17);
reduced pressure gaseous nitrogen conduit means for introducing said reduced pressure gaseous nitrogen stream (17) to a nitrogen purification unit (54);
ultra high purity liquid oxygen conduit means for withdrawing an ultra high purity liquid oxygen product stream (8,38,48,68,78) from said high purity liquid oxygen unit (52);
argon-enriched waste conduit means for withdrawing an argon-enriched waste stream (7,47,67,77) from said high purity liquid oxygen unit (52); and
hydrocarbon-enriched waste conduit means for withdrawing a hydrocarbon-enriched waste stream (3,43,76) from said high purity liquid oxygen unit (52).

14. An apparatus as claimed in Claim 13 constructed as a portable skid for coupling between a source of standard liquid nitrogen and a nitrogen purification unit for producing ultra high purity nitrogen therefrom.

## Patentansprüche

1. , Verfahren zur Erzeugung von ultrahochreinem, flüssigem Sauerstoff aus flüssigem Sauerstoff von Standard-Qualität mit den folgenden Schritten:
Unterdrucksetzen von zugeführtem, flüssigem Stickstoff (100), um einen Hochdruckstrom (200) aus flüssigem Stickstoff zu erzeugen;
Verdampfen wenigstens eines Teils des Hochdruckstroms (200) aus flüssigem Stickstoff, um einen Hochdruckstrom (9) aus gasförmigem Stickstoff zu erzeugen;
Einführung des flüssigen Sauerstoffs (1) von Standard-Qualität zu einer Einheit (52) für hochreinen flüssigen Sauerstoff, um den flüssigen Sauerstoff von Standard-Qualität zu dem flüssigen, ultrahochreinen Sauerstoff zu reinigen;
Einführung des Hochdruckstroms (9) aus gasförmigem Stickstoff zu wenigstens einem Boden-Aufkocher bzw. Reboiler/Verflüssiger bzw. Kondensator (12, 13, 58, 59, 63, 73, 74) der Einheit (52) für hochreinen, flüssigen Sauerstoff, um der Einheit (52) für hochreinen, flüssigen Sauerstoff Wärme zuzuführen und einen Stickstoff-Kondensatstrom (14) zu bilden;
Einführung des Stickstoff-Kondensatstroms (14) zu wenigstens einem Kopf-Aufkocher bzw. Reboiler/Verflüssiger bzw. Kondensator (16, 41, 56, 57, 61, 62, 71, 72) der Einheit (52) für hochreinen, flüssigen Sauerstoff, um der Einheit (52) für hochreinen, flüssigen Sauerstoff Kälte zuzuführen und einen Strom (17) aus gasförmigem Stickstoff mit reduziertem Druck zu bilden;
Einführung des Stroms (17) aus gasförmigem Stickstoff mit reduziertem Druck zu einer Stickstoff-Reinigungseinheit (54); und
Abziehen aus der Einheit (52) für den hochreinen, flüssigen Sauerstoff:
(a) einen Produktstrom (8, 38, 48, 68, 78) aus ultrahochreinem, flüssigem Sauerstoff;
(b) einen Argon-angereicherten Abfallstrom (7, 47, 67, 77); und
(c) einen Kohlenwasserstoff-angereicherten Abfallstrom (3, 43, 76).

2. Verfahren nach Anspruch 1, bei dem nur ein Teil des Hochdruckstroms aus flüssigem Stickstoff verdampft wird, um den Hochdruckstrom (9) aus gasförmigem Stickstoff zu bilden, und wenigstens ein Teil des verbleibenden Anteils (15) des Hochdruckstroms aus flüssigem Stickstoff mit dem Stickstoff-Kondensatstrom (14) kombiniert wird, um einen kombinieren Strom zu bilden, der dem wenigstens einen Kopf-Aufkocher bzw. Reboiler/Verflüssiger bzw. Kondensator (16, 41, 56, 57, 61, 62, 71, 72) der Einheit (52) für den hochreinen, flüssigen Sauerstoff zugeführt wird.

3. Verfahren nach Anspruch 1 oder 2, bei dem der flüssige Sauerstoff (1) mit Standard-Qualität einer ersten Destillationssäule (2) zur Auftrennung in den Kohlenwasserstoff-angereicherten Abfallstrom (3) und einen Argon und Sauerstoffenthaltenden Kopf-Dampfstrom (4) zugeführt wird und der Kopf-Dampfstrom (4) einer zweiten Destillationssäule (6) zur Auftrennung in Argon-angereicherten Kopf- bzw. Overhead-Dampf und den ultrahochreinen, flüssigen Sauerstoff als Bodenprodukt (8) zugeführt wird.

4. Verfahren nach Anspruch 3, bei dem der wenigstens eine Kopf-Aufkocher bzw. Reboiler/Verflüssiger bzw. Kondensator (16) der zweiten Destillationssäule (6) zugeordnet ist;
ein Teil des Argon-angereicherten Kopf-Dampfes in dem ersten Kopf-Aufkocher bzw. Reboiler/Verflüssiger bzw. Kondensator (16) kondensiert und als Rückfluss zur zweiten Destillationssäule (6) zurückgeführt wird;
der verbleibende Teil des Argon-angereicherten Kopf-Dampfes als der Argon-angereicherte Abfallstrom (6) abgezogen wird; und
ein flüssiger Nebenstrom (5) von der zweiten Destillationssäule (6) abgezogen und der ersten Destillationssäule (2) als Rückfluss zugeführt wird.

5. Verfahren nach Anspruch 3, wobei
der wenigstens eine Kopf-Aufkocher bzw. Reboiler/Verflüssiger bzw. Kondensator (57) der zweiten Destillationssäule (6) zugeordnet ist;
ein anderer des wenigstens einen Kopf-Aufkocher bzw. Reboilers/Verflüssigers bzw. Kondensator (56) der ersten Destillationssäule (2) zugeordnet ist;
wobei der Argon und Sauerstoff enthaltende Kopf-Dampfstrom in dem zweiten Kopf-Aufkocher bzw. Reboiler/Verflüssiger bzw. Kondensator (56) kondensiert und ein Teil als Rückfluss zu der ersten Destillationssäule (2) zurückgeführt wird;
wobei ein Teil des Argon-angereicherten Kopf-Dampfs in dem zweiten Kopf-Aufkocher bzw. Reboiler/Verflüssiger bzw. Kondensator (57) kondensiert und als Rückfluss zu der zweiten Destillationssäule (6) zurückgeführt wird; und
wobei der verbleibende Teil des Argon-angereicherten Kopf-Dampfes als der Argon-angereicherte Abfall-Strom (7) abgezogen wird.

6. Verfahren nach Anspruch 1 oder 2, wobei der flüssige Sauerstoff (1) mit Standard-Qualität einer ersten Destillationssäule (2) zur Trennung in den Argon-angereicherten Abfall-Strom (67) und einen Kohlenwasserstoff und Sauerstoff enthaltenden Boden-Strom (44) zugeführt wird; und
wobei der Boden-Strom (44) einer zweiten Destillationssäule (6) zur Auftrennung in den ultrahochreinen Strom (48) aus flüssigem Sauerstoff und den Kohlenwasserstoff-angereicherten Abfallstrom (43) zugeführt wird.

7. Verfahren nach Anspruch 1 oder 2, wobei der flüssige Sauerstoff (1) mit Standard-Qualität einer ersten Destillationssäule (2) zur Auftrennung in den Kohlenwasserstoff-angereicherten Abfall-Strom (3) und den Argon-angereicherten Abfallstrom (67) zugeführt wird;
wobei ein Dampf-Strom (65) aus der ersten Destillationssäule (2) abgezogen und einer zweiten Destillationssäule (6) zur Rektifikation zu ultrahochreinem, gasförmigem Sauerstoff und einem flüssigen Strom (64) zugeführt wird;
wobei der flüssige Strom (64) der ersten Destillationssäule (2) zugeführt wird; und
wobei ein wenigstens ein Kopf-Aufkocher bzw. Reboiler/Verflüssiger bzw. Kondensator (62) der zweiten Destillationssäule (6) zugeordnet ist und den gasförmigen, ultrahochreinen Sauerstoff kondensiert, um den ultrahochreinen, flüssigen Sauerstoff (68) zu bilden.

8. Verfahren nach Anspruch 1 oder 2, wobei der flüssige Sauerstoff (1) mit Standard-Qualität einer ersten Destillationssäule (2) zur Auftrennung in einem Kopf-Strom (79), der Argon und Sauerstoff enthält, und einen Boden-Strom (75) zugeführt wird, der Kohlenwasserstoffe und Sauerstoff enthält; und
wobei der Kopf-Strom (79) und der Boden-Strom (75) einer zweiten Destillationssäule (6) zur Auftrennung in den Argon-angereicherten Abfall-Strom (77), den ultrahochreinen, flüssigen Sauerstoff (78) und den Kohlenwasserstoff-angereicherten Abfall-Strom (76) zugeführt wird.

9. Verfahren nach Anspruch 8, wobei
ein wenigstens ein Kopf-Aufkocher bzw. Reboiler/Verflüssiger bzw. Kondensator (72) der zweiten Destillationssäule (6) zugeordnet ist;
wobei ein anderer der wenigstens einen Kopf-Aufkocher bzw. Reboiler/Verflüssiger bzw. Kondensator (71) der ersten Destillationssäule (2) zugeordnet ist;
wobei der Argon und Sauerstoff enthaltende Kopf-Strom in einem weiteren Kopf-Aufkocher bzw. Reboiler/Verflüssiger bzw. Kondensator (71) kondensiert wird und ein Teil als Rückfluss zu der ersten Destillationssäule (2) zurückgeführt wird;
wobei ein Teil des Argon-angereicherten Kopf-Dampfes in der zweiten Destillationssäule (6) in dem Kopf-Aufkocher bzw. Reboiler/Verflüssiger bzw. Kondensator (72) kondensiert und als Rückfluss zu der zweiten Destillationssäule (6) zurückgeführt wird; und
wobei der verbleibende Teil des Argon-angereicherten Kopf-Dampfes als der Argon-angereicherte Abfall-Strom (77) abgezogen wird.

10. Verfahren nach Anspruch 8, wobei ein wenigstens ein Kopf-Aufkocher bzw. Reboiler/Verflüssiger bzw. Kondensator (72) der zweiten Destillationssäule (6) zugeordnet ist;
wobei ein Teil des Argon-angereicherten Kopf-Dampfes in der zweiten Destillationssäule (6) in dem Kopf-Rufkocher bzw. Reboiler/Verflüssiger bzw. Kondensator (72) kondensiert und als Rückfluss zu der wenigstens einen, zweiten Destillationssäule (6) zurückgeführt wird;
wobei der verbleibende Teil des Argon-angereicherten Kopf-Dampfes als der Argon-angereicherte Abfall-Strom (77) abgezogen wird;
wobei ein flüssiger Neben-Strom (82) von der zweiten Destillationssäule (6) abgezogen und der ersten Destillationssäule (2) zugeführt wird; und
wobei ein Dampf-Nebenstrom (81) von der zweiten Destillationssäule (6) abgezogen und der ersten Destillationssäule (2) zugeführt wird.

11. Verfahren nach einem der vorhergehenden Ansprüche, wobei die Beschickung (100) aus flüssigem Stickstoff auf einen Druck unter Druck gesetzt wird, der ausreicht, um die Einheit (54) für den hochreinen, flüssigen Sauerstoff anzutreiben.

12. Verfahren nach Anspruch 11, wobei der Druck ausreicht, um den Strom (400) aus gasförmigen Stickstoff mit reduziertem Druck bei 350 bis 1.050 kPa (50 bis 150 psia) zu liefern.

13. Vorrichtung zur Erzeugung von hochreinem, flüssigem Sauerstoff aus flüssigem Sauerstoff mit Standard-Qualität durch das Verfahren, wie es in Anspruch 1 definiert ist, wobei die Vorrichtung aufweist:
eine Pumpenanordnung, um eine Beschickung (100) aus flüssigem Stickstoff unter Druck zu setzen, so dass ein Hochdruck-Strom (200) aus flüssigem Stickstoff zur Verfügung gestellt wird;
eine Heizanordnung zur Verdampfung wenigstens eines Teils des Hochdruckstroms (200) aus flüssigem Stickstoff, um einen Hochdruckstrom (9) aus gasförmigem Stickstoff zu bilden;
eine Einheit (52) für hochreinen, flüssigen Sauerstoff zur Reinigung des flüssigen Sauerstoffs mit Standard-Qualität zu ultrahochreinem, flüssigem Sauerstoff mit wenigstens einem Boden-Aufkocher bzw. Reboiler/Verflüssiger bzw. Kondensator (12, 13, 58, 59, 63, 73, 74) und mit wenigstens einem Kopf-Aufkocher bzw. Reboiler/Verflüssiger bzw. Kondensator (16, 41, 56, 57, 61, 62, 71, 72);
eine Leitungsanordnung für flüssigen Sauerstoff mit Standard-Qualität zur Einführung des flüssigen Sauerstoffs (1) mit Standard-Qualität zu der Einheit (52) für hochreinen, flüssigen Sauerstoff;
eine Leitungsanordnung für den gasförmigen Stickstoff unter Hochdruck zur Einführung des Hochdruck-Stroms (9) aus gasförmigem Stickstoff zu wenigstens: einem Boden-Aufkocher bzw. Reboiler/Verflüssiger bzw. Kondensator (12, 13, 58, 59, 63, 73, 74) der Einheit (52) für hochreinen, flüssigen Sauerstoff, um Wärme für die Einheit (52) für flüssigen, hochreinen Sauerstoff zur Verfügung zu stellen und einen Stickstoff-Kondensatstrom (14) zu bilden;
eine Leitungsanordnung für das Stickstoff-Kondensat, um den Stickstoff-Kondensatstrom (14) wenigstens einem Kopf-Aufkocher bzw. Reboiler/Verflüssiger bzw. Kondensator (16, 41, 56, 57, 61, 62, 71, 72) der Einheit (52) für hochreinen, flüssigen Sauerstoff zuzuführen, um Kälte für die Einheit (52) für den hochreinen, flüssigen Sauerstoff zur Verfügung zu stellen und einen Strom (17) aus gasförmigem Stickstoff mit reduziertem Druck zu bilden;
eine Leitungsanordnung für den gasförmigen Stickstoff mit verringertem Druck, um den Strom (17) aus gasförmigem Stickstoff mit verringertem Druck einer Stickstoff-Reinigungseinheit (54) zuzuführen;
eine Leitungsanordnung für ultrahochreinen, flüssigen Sauerstoff, um aus der Einheit (52) für hochreinen, flüssigen Sauerstoff einen Produktstrom (8, 38, 48, 68, 78) aus ultrahochreinem, flüssigem Sauerstoff abzuziehen;
eine Leitungsanordnung für Argon-angereicherten Abfall, um aus der Einheit (52) für hochreinen, flüssigen Sauerstoff einen Argon-angereicherten Abfall-Strom (7, 47, 67, 77) abzuziehen; und
eine Leitungsanordnung für Kohlenwasserstoff-angereicherten Abfall, um einen Kohlenwasserstoff-angereicherten Abfall-Strom (3, 43, 76) von der Einheit (52) für hochreinen, flüssigen Sauerstoff abzuziehen.

14. Vorrichtung nach Anspruch 13, der als tragbarer Transportbehälter bzw. Skid zum Koppeln zwischen einer Quelle für flüssigen Standard-Stickstoff und einer Stickstoff-Reinigungseinheit zur Erzeugung von ultrahochreinem Stickstoff daraus aufgebaut ist.

## Revendications

1. Procédé de production d'oxygène liquide à ultrahaute pureté à partir d'oxygène liquide de qualité standard comprenant les étapes consistant à :
mettre sous pression une charge d'azote liquide (100) pour obtenir un courant d'azote liquide à haute pression (200);
vaporiser au moins une partie dudit courant d'azote liquide à haute pression (200) pour former un courant d'azote gazeux à haute pression (9);
introduire ledit oxygène liquide de qualité standard (1) dans une unité de production d'oxygène liquide à haute pureté (52) pour purifier ledit oxygène liquide de qualite standard en ledit oxygène liquide à ultrahaute pureté;
introduire ledit courant d'azote gazeux à haute pression (9) dans au moins un rebouilleur/condenseur inférieur (12,13,58,59,63,73,74) de ladite unité de production d'oxygène liquide à haute pureté (52) pour fournir de la chaleur à ladite unité de production d'oxygène liquide à haute pureté (52) et pour former un courant de produit de condensation d'azote (14);
introduire ledit courant de produit de condensation d'azote (14) dans au moins un rebouilleur/condenseur supérieur (16,41,56,57,61,62,71,72) de ladite unité de production d'oxygène liquide à haute pureté (52) pour assurer une réfrigération à ladite unité de production d'oxygène liquide à haute pureté (52) et pour former un courant d'azote gazeux à pression réduite (17);
introduire ledit courant d'azote gazeux à pression réduite (17) dans une unité de purification d'azote (54); et
retirer de ladite unité de production d'oxygène liquide à haute pureté (52) : (a) un courant de produit d'oxygène liquide à ultrahaute pureté (8,38,48,68,78); (b) un courant de déchets enrichi en argon (7,47,67,77); et (c) un courant de déchets enrichi en hydrocarbures (3,43,76).

2. Procédé selon la revendication 1, dans lequel on vaporise seulement une partie dudit courant d'azote liquide à haute pression pour former ledit courant d'azote gazeux à haute pression (9) et on combine au moins une partie du reste (15) dudit courant d'azote liquide à haute pression avec ledit courant de produit de condensation d'azote (14) pour former un courant combiné que l'on introduit dans ledit au moins un rebouilleur/condenseur supérieur (16,41,56,57,61,62,71,72) de ladite unité de production d'oxygène liquide à haute pureté (52).

3. Procédé selon la revendication 1 ou la revendication 2, dans lequel on introduit ledit oxygène liquide de qualité standard (1) dans une première colonne de distillation (2) pour le séparer en ledit courant de déchets enrichi en hydrocarbures (3) et un courant de vapeur de tête (4) contenant de l'argon et de l'oxygène; et on introduit ledit courant de vapeur de tête (4) dans une seconde colonne de distillation (6) pour le séparer en une fraction de tête .de vapeur enrichie en argon et en ledit oxygène liquide à ultrahaute pureté sous la forme d'un produit de queue (8).

4. Procédé selon la revendication 3, dans lequel :
ledit au moins un rebouilleur/condenseur supérieur (16) est associé à ladite seconde colonne de distillation (6)
on condense une partie de ladite fraction de tête de vapeur enrichie en argon dans ledit premier rebouilleur/condenseur supérieur (16) et on la renvoie sous forme de reflux dans ladite seconde colonne de distillation (6);
on retire la partie restante de ladite fraction de tête de vapeur enrichie en argon sous la forme dudit courant de déchets enrichi en argon (7) ; et
on retire un courant latéral liquide (5) de ladite seconde colonne de distillation (6) et on l'introduit dans ladite première colonne de distillation (2) sous forme de reflux.

5. Procédé selon la revendication 3, dans lequel :
ledit au moins un rebouilleur/condenseur supérieur (57) est associé à ladite seconde colonne de distillation (6);
ledit au moins un autre rebouilleur/condenseur supérieur (56) est associé à ladite première colonne de distillation (2) ;
on condense ledit courant de vapeur de tête contenant de l'argon et de l'oxygène dans ledit second rebouilleur/condenseur supérieur (56) et on en renvoie une partie sous forme de reflux dans ladite première colonne de distillation (2);
on condense une partie de ladite fraction de tête de vapeur enrichie en argon dans ledit second rebouilleur/condenseur supérieur (57) et on la renvoie sous forme de reflux dans ladite seconde colonne de distillation (6); et
on retire la partie restante de ladite fraction de tête de vapeur enrichie en argon sous la forme dudit courant de déchets enrichi en argon (7).

6. Procédé selon la revendication 1 ou la revendication 2, dans lequel on introduit ledit oxygène liquide de qualité standard (1) dans une première colonne de distillation (2) pour le séparer en ledit courant de déchets enrichi en argon (67) et un courant de queue (44)., contenant des hydrocarbures et de l'oxygène; et
on introduit ledit courant de queue (44) dans une seconde colonne de distillation (6) pour le séparer en ledit courant d'oxygène liquide à ultrahaute pureté (48) etc ledit courant de déchets enrichi en hydrocarbures (43).

7. Procédé selon la revendication 1 ou la revendication 2, dans lequel on introduit ledit oxygène liquide de qualité standard (1) dans une première colonne de distillation (2) pour le séparer en ledit courant de déchets enrichi en hydrocarbures (3) et ledit courant de déchets enrichi en argon (67);
on retire un courant de vapeur (65) de ladite première colonne de distillation (2) et on l'introduit dans une seconde colonne de distillation (6) pour effectuer sa rectification en oxygène gazeux à ultrahaute pureté et en un courant liquide (64);
on introduit ledit courant liquide (64) dans ladite première colonne de distillation (2);
ledit au moins un rebouilleur/condenseur (62) est associé à ladite seconde colonne de distillation (6) et condense ledit oxygène gazeux à ultrahaute pureté pour former ledit oxygène liquide à ultrahaute pureté (68).

8. Procédé selon la revendication 1 ou 2, dans lequel on introduit ledit oxygène liquide de qualité standard (1) dans une première colonne de distillation (2) pour le séparer en un courant de tête (79) contenant de l'argon et de l'oxygène et un courant de queue (75) contenant des hydrocarbures et de l'oxygène; et
on introduit ledit courant de tête (79) et ledit courant de queue (75) dans une seconde colonne de distillation (6) pour les séparer en ledit courant de déchets enrichi en argon (77), ledit oxygène liquide à ultrahaute pureté (78), et ledit courant de déchets enrichi en hydrocarbures (76).

9. Procédé selon la revendication 8 dans lequel :
ledit au moins un rebouilleur/condenseur supérieur (72) est associé à ladite seconde colonne de distillation (6);
ledit au moins un autre rebouilleur/condenseur supérieur (71) est associé à ladite première colonne de distillation (2);
on condense ledit courant de tête contenant de l'argon et de l'oxygène dans ledit autre rebouilleur/condenseur supérieur (71) et on en renvoie une partie sous forme de reflux dans ladite première colonne de distillation (2);
on condense une partie de la fraction de tête de vapeur enrichie en argon de ladite seconde colonne de distillation (6) dans ledit rebouilleur/condenseur supérieur (72) et on la renvoie sous forme de reflux dans ladite seconde colonne de distillation (6); et
on retire la partie restante de ladite fraction de tête de vapeur enrichie en argon sous la forme dudit courant de déchets enrichi en argon (77).

10. Procédé selon la revendication 8, dans lequel :
ledit au moins un rebouilleur/condenseur supérieur (72) est associé à ladite seconde colonne de distillation (6);
on condense une partie de la fraction de tête de vapeur enrichie en argon de ladite seconde colonne de distillation (6) dans ledit au moins un rebouilleur/condenseur supérieur (72) et on la renvoie sous forme de reflux dans ladite seconde colonne de distillation (6);
on retire la partie restante de ladite fraction de tête de vapeur enrichie en argon sous la forme dudit courant de déchets enrichi en argon (77);
on retire un courant latéral de liquide (82) de ladite seconde colonne de distillation (6) et on l'introduit dans ladite première colonne de distillation (2); et
on retire un courant latéral de vapeur (81) de ladite seconde colonne de distillation (6) et on l'introduit dans ladite première colonne de distillation (2).

11. Procédé selon l'une quelconque des revendications précédentes, dans lequel on met ladite charge d'azote liquide (100) sous une pression suffisante pour faire fonctionner ladite unité de production d'oxygène liquide à haute pureté (54).

12. Procédé selon la revendication 11, dans lequel ladite pression est suffisante pour fournir ledit courant d'azote gazeux à pression réduite (400) à une pression de 350 à 1050 kPaa (50 à 150 psia).

13. Appareil de production d'oxygène liquide à ultrahaute pureté à partir d'oxygène liquide de qualité standard par le procédé selon la revendication 1, ledit appareil comprenant :
des moyens de pompage pour mettre sous pression une charge d'azote liquide (100) pour fournir un courant d'azote liquide à haute pression (200);
des moyens de chauffage pour vaporiser au moins une partie dudit courant d'azote liquide à haute pression (200) pour former un courant d'azote gazeux à haute pression (9);
une unité de production d'oxygène liquide à haute pureté (52) pour purifier ledit oxygène liquide de qualité standard en ledit oxygène liquide à ultrahaute pureté et comportant au moins un rebouilleur/condenseur inférieur (12,13,58,59,63,73,74) et au moins un rebouilleur/condenseur supérieur (16,41,56,57,61,62,71,72) ;
des moyens de conduite d'oxygène liquide de qualité standard pour introduire ledit oxygène liquide de qualité standard (1) dans ladite unité de production d'oxygène liquide à haute pureté (52) ;
des moyens de conduite d'azote gazeux à haute pression pour introduire ledit courant d'azote gazeux à haute pression (9) dans au moins un rebouilleur/condenseur inférieur (12,13,58,59,63,73,74) de ladite unité de production d'oxygène liquide à haute pureté (52) pour fournir de la chaleur à ladite unité de production d'oxygène liquide à haute pureté (52) et pour former un courant de produit de condensation d'azote (14);
des moyens de conduite du produit de condensation d'azote pour introduire ledit courant de produit de condensation d'azote (14) dans au moins un rebouilleur/condenseur supérieur (16,41,56,57,61,62,71,72) de ladite unité de production d'oxygène liquide à haute pureté (52) pour assurer la réfrigération de ladite unité de production d'oxygène liquide à haute pureté (52) et pour former un courant d'azote gazeux à pression réduite (17);
des moyens de conduite d'azote gazeux à pression réduite pour introduire ledit courant d'azote gazeux à pression réduite (17) dans une unité de purification d'azote (54) ;
des moyens de conduite d'oxygène liquide à ultrahaute pureté pour retirer un courant de produit d'oxygène liquide à ultrahaute pureté (8,38,48,68,78) de ladite unité de production d'oxygène liquide à haute pureté (52);
des moyens de conduite de déchets enrichis en argon pour retirer un courant de déchets enrichi en argon (7, 47, 67, 77) de ladite unité de production d'oxygène liquide à haute pureté (52); et
des moyens de conduite de déchets enrichis en hydrocarbures pour retirer un courant de déchets enrichi en hydrocarbures (3,43,76) de ladite unité de production d'oxygène liquide à haute pureté (52).

14. Appareil selon la revendication 13, construit sous la forme d'une plate-forme portable destinée à être couplée entre une source d'azote liquide standard et une unité de purification d'azote pour la production d'azote à ultrahaute pureté à partir de celle-ci.
